# EUROPEAN PATENT SPECIFICATION

(11) **EP 3 701 670 B1**
(45) Date of publication and mention of the grant of the patent: **21.01.2026**
(21) Application number: 18871068.5
(22) Date of filing: 26.10.2018
(51) Int. Cl.: H04L 9/32, G06F 21/62, G06Q 20/02, G06Q 40/04, G06Q 10/10, H04L 9/00, G06Q 20/22

(54) **SYSTEM AND METHOD FOR BLOCKCHAIN COEXISTENCE**
SYSTEM UND VERFAHREN FÜR BLOCKCHAIN-KOEXISTENZ
SYSTÈME ET PROCÉDÉ DE DÉTERMINATION D'ÉVÉNEMENT

(30) Priority: 27.10.2017 IN 201721038132
(43) Date of publication of application: 02.09.2020
(73) Proprietor: Tata Consultancy Services Limited, Pune 411016 (IN)
(72) Inventor: RAMGOPAL, Vivekanand, Chennai, Tamil Nadu 600017 (IN)
(74) Representative: Goddar, Heinz J.
(86) International application number: PCT/IB2018/058384
(87) International publication number: WO 2019/082146

(56) References cited:
- EP-A1- 3 688 957
- EP-B1- 3 688 957
- WO-A1-2017/145019
- CN-B- 102 316 161
- US-A1- 2015 244 690
- US-A1- 2015 379 510
- US-A1- 2016 358 184
- US-A1- 2017 140 408
- US-A1- 2017 237 554
- US-A1- 2017 243 193
- US-A1- 2017 289 111
- SRIDHAR JAY: "Using Jackson for JSON Serialization and Deserialization | Novixys Software Dev Blog", 30 January 2017 (2017-01-30), pages 1 - 13, XP055815440, Retrieved from the Internet <URL:https://www.novixys.com/blog/jackson-json-serialization/#2_Converting_a_POJO_to_JSON> [retrieved on 20210618]
- ZHANG ET AL.: "Town Crier: An Authenticated Data Feed for Smart Contracts", ACM DIGITAL LIBRARY, 24 October 2016 (2016-10-24), pages 270 - 282, XP055594521, ISBN: 978-1-4503-4139-4, Retrieved from the Internet <URL:https://dl.acm.org/citation.cfm?id=2978326> [retrieved on 20190225], DOI: 10.1145/2976749.2978326

## Description

### PRIORITY

The present application claims priority from Indian patent application number 201721038132, filed on October 27, 2017.

### TECHNICAL FIELD

The present disclosure in general relates to data management, and more particularly to system and method for block chain coexistence.

### BACKGROUND

In the field of data management, a blockchain is a key technology for providing real-time processing, transparency and collaboration. The blockchain is an emerging field which provides faster, cheaper, more secure and transparent transactions. The blockchain is able to synchronize data across participating entities and encourages firms to collaborate. The blockchain is an asset database or a distributed ledger and can be shared across a network of multiple sites, geographies or institutions. Here, every user in the network may maintain an own identical copy of the ledger. Any changes made in the ledger can be reflected in all copies within minutes or seconds. The assets include financial, legal, physical and electronic. But, portability of a blockchain process with other non-block chain processes is a challenging task. The conventional methods are not able to provide coexistence of the blockchain with the non-block chain systems.

EP 3688957A1 discloses the blockchain cloud service includes nodes of the distributed ledger and a management console component (230). The management console component (230) includes a web application running in a script runtime environment, a plurality of backend of APIs for communicating with various nodes of the blockchain cloud service, and a plurality of client APIs configured to be invoked by a client application. The plurality of client APIs uses one or more of the plurality of backend APIs in provisioning the distributed ledger as a blockchain cloud service, and in managing the managing the blockchain cloud service.

WO 2017/145019 A1 discloses tokenisation, blockchain and smart contract technologies. It provides a technical arrangement which simplifies the automated management of contracts. The invention comprises a method and system which use a computer-based repository for storage of the contract. The contract is then represented by a transaction on the blockchain. Metadata within the transaction's script includes a hash of the contract and a means of identifying its location within the repository. The transaction also includes an unspent output (UTXO) which indicates its status as an open (ie not terminated) contract. The contract is terminated by spending the output at a later point in time, for example, using n Lock Time + Check Lock Time Verify (CLTV). By combining this concept with other techniques and computing components, the invention can provide a powerful mechanism for implementing various tasks such as renewing or rolling over the contract, or dividing it into sub-contracts or conditions. Furthermore, as the status and existence of the contract is evidence via the blockchain, this provides a permanent, publicly visible and non-alterable record of the contract.

CN 102 316 161 B discloses a data transmission device applied to Web3D (Three-dimensional), in particular to a device for transmitting data with the Internet. The data transmission device comprises a request judging device, a scene data reading device, a data conversion device and an interface mapping device, wherein the request judging device is used for judging the position of data requested by a client, and resolving position information such as a server where the data are positioned, a scope and the like; the scene data reading device is used for reading various types of three-dimensional objects in different scenes and converting object data into an XML (Extensive Makeup Language) encapsulating structure; the data converting device is used for converting the object data among the XML encapsulating structure, an SOAP (Simple Object Access Protocol) encapsulating structure and a JSON (JavaScript Serialized Object Notation) encapsulating structure; and the interface mapping device is used for establishing a corresponding mapping relation between data interfaces in a JavaScript module and an OpenGL module, and transmitting response data of a server end to a local OpenGL graphics library. According to the method and the device, integrated utilization of Web3D application and other application systems is realized, and data sharing, information management and maintenance and the like are achieved. The invention further provides a data control method applying the data transmission device.

"Jackson for JSON Serialization" discloses jackson is one of the most common Java libraries for processing JSON. It is used for reading and writing JSON among other tasks. Using jackson can easily handle automatic conversion from Java objects to JSON and back.

Thus, solutions or platforms that enable communication between multiple blockchain deployments to co-exist and interoperate between them will be appreciated.

### SUMMARY

Embodiments of the present disclosure provides technological improvements as solutions to one or more of the above-mentioned technical problems recognized by the inventors in conventional systems. For example, in one embodiment, a method and system providing a gateway framework that enables coexistence between a blockchain ecosystem and a non-blockchain ecosystem.

A processor-implemented method for coexistence between a blockchain ecosystem and a non-blockchain ecosystem according to claim 5.

A system is configured to provide coexistence between a blockchain ecosystem and a non-blockchain ecosystem according to claim 1.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a networking environment implementing blockchain coexistence, in accordance with an embodiment of the present subject matter;
FIG. 2 illustrates a block diagram of a system for blockchain coexistence, in accordance with an example embodiment;
FIG. 3 illustrates an example architecture diagram for the blockchain coexistence, in accordance with an example embodiment;
FIG. 4 illustrates an example block diagram for a gateway framework, in accordance with an example embodiment; and
FIG. 5 illustrates a flowchart for a blockchain coexistence, in accordance with an example embodiment.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

The embodiments herein provide a method and a system for blockchain coexistence between a blockchain ecosystem and a non-blockchain ecosystem. It would be appreciated that the system described herein, alternatively referred as a gateway which enables a communication between any existing system and blockchain ecosystem thereby establishing coexistence between them. It is to be appreciated that a blockchain platform is alternatively referred as a Distributed Ledger (DL) platform.

It would be appreciated that the system is configured to connect a blockchain solution with at least one existing application by utilizing the gateway framework. The gateway framework includes a gateway and information on a set of smart solutions. The gateway incudes a simple Java APIs (Application Programming Interfaces) on one side for the existing systems or the traditional applications to connect to the blockchain APIs on the other side for connecting with the different block chain technologies.

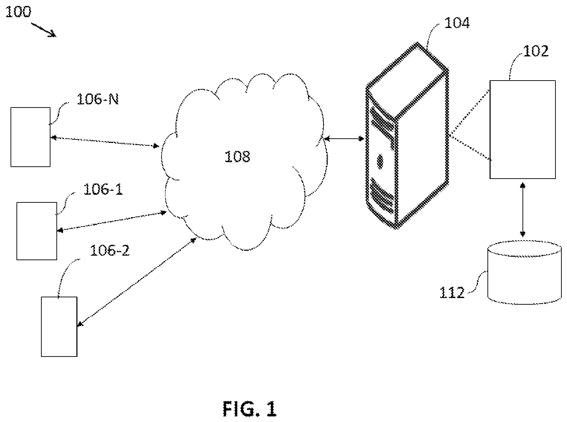

Referring now to the drawings, and more particularly to FIG. 1 through FIG. 5, where similar reference characters denote corresponding features consistently throughout the figures, there are shown preferred embodiments and these embodiments are described in the context of the following exemplary system and/or method.

FIG. 1 illustrates a blockchain environment (100) wherein a system (102) for blockchain coexistence between one blockchain ecosystem and a non-blockchain ecosystem, according to some embodiments of the present disclosure. The system (102) is configured to implement a gateway framework. The system (102) may be embodied in a computing device, for instance a computing device (104).

Although the present disclosure is explained considering that the system (102) is implemented on a server, it may be understood that the system (102) may also be implemented in a variety of computing systems, such as a laptop computer, a desktop computer, a notebook, a workstation, a cloud-based computing environment and the like. In one implementation, the system (102) may be implemented in a cloud-based environment. It will be understood that the system (102) may be accessed by multiple users through one or more user devices 106-1, 106-2... 106-N, collectively referred to as user devices (106) hereinafter, or applications residing on the user devices (106). Examples of the user devices (106) may include, but are not limited to, a portable computer, a personal digital assistant, a handheld device, a smartphone, a tablet computer, a workstation and the like. The user devices (106) are communicatively coupled to the system (102) through a network (108).

In an embodiment, the network (108) may be a wireless or a wired network, or a combination thereof. In an example, the network (108) can be implemented as a computer network, as one of the different types of networks, such as virtual private network (VPN), intranet, local area network (LAN), wide area network (WAN), the internet, and such. The network (106) may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network (108) may include a variety of network devices, including routers, bridges, servers, computing devices, storage devices. The network devices within the network (108) may interact with the system (102) through communication links.

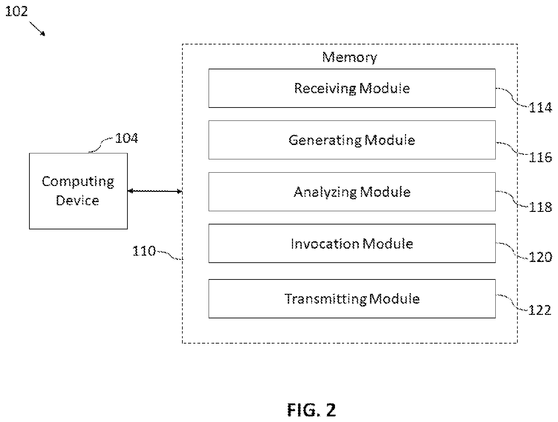

As discussed above, the system (102) may be implemented in a computing device (104), such as a hand-held device, a laptop or other portable computer, a tablet computer, a mobile phone, a PDA, a smartphone, and a desktop computer. The system (102) may also be implemented in a workstation, a mainframe computer, a server, and a network server. In an embodiment, the system (102) may be coupled to a data repository, for example, a repository (112). The repository (112) may store data processed, received, and generated by the system (102). In an alternate embodiment, the system (102) may include the data repository (112). The components and functionalities of the system (102) are described further in detail with reference to FIG. 2.

Referring FIG. 2, the system (102) further comprising a receiving module (114), a generating module (116), an analyzing module (118), an invocation module (120), and a transmitting module (122). It is to be that the system (102) described herein, alternatively referred as a gateway which enables a communication between any existing system and blockchain ecosystem thereby establishing coexistence between them.

In the preferred embodiment, the receiving module (114) of the system (102) is configured to receive a set of business processes, a set of protocols and a message format of the non-blockchain ecosystem.

In the preferred embodiment, the generating module (116) of the system (102) is configured to generate a smart contract from the received set of business processes of the non-blockchain ecosystem. It would be appreciated that the traditional applications are associated with a database and they may be communicated by utilizing simple APIs only because they are independent of different underlying native distributed ledger application programming interface (DLAPI).

In the preferred embodiment, the analyzing module (118) of the system (102) is configured to analyze a smart contract of the blockchain ecosystem and the received set of protocols and the message format of the non-blockchain ecosystem to transmit at least one transaction. It would be appreciated that a set of smart solutions of the blockchain includes a set of smart contracts, a set of status transitions, digital signature, journal and audit, a set of pluggable software components. In a blockchain solution, a set of new data blocks are appended to the distributed ledger and based on business requirements, a set of states associated with the transaction is maintained. Further, the set of status transitions can be performed as a new transaction, appending one more block in the chain. Further, the blockchain provides cryptography-based security aspects. Additionally, the blockchain solution includes additional security layers including signatures to validate the identity of a user. Furthermore, each blockchain transaction is audited by the solution and complete journal and audit trail of the traditional application is maintained.

In an alternate embodiment, the pluggable software components are an extension to enable applications to call a Quartz Gateway. Here, a data conversion from Java Script Object Notation (JSON) source and Business Plain Old Java Object (POJO) can be done based on mapping XML. Additionally, the data conversion from Business POJO to JSON can be performed. The signature of the API can be a JSON object. In the Quartz Gateway, JSON object includes a header, a payload and an access policy. Further, the Quartz Gateway is capable of eliminating a need for large scale changes to be done in the existing applications to adapt to multiple technologies.

In the preferred embodiment, the invocation module (120) of the system (102) is configured to invoke at least one distributed ledger application programming interface (DLAPI) based on the analysis of the smart contract of the blockchain ecosystem and the set of protocols and the message format of the non-blockchain ecosystem. The DLAPI is associated with an API Catalogue including a list of APIs for a plurality of applications. It is to be noted that the DLAPI invokes a distributed ledger (DL) Controller to access a distributed ledger (DL) Processor to get details from a distributed ledger (DL) Platform. The DL Platform has a service id and subscription details. Further, the system (102) is capable of publishing a set of APIs for business use cases that are realized in DL platform.

In the preferred embodiment, the transmitting module (122) of the system (102) is configured to transmit the at least one transaction between the blockchain ecosystem and the non-blockchain ecosystem using the invoked at least one distributed ledger application programming interface (DLAPI). It would be appreciated that the system (102) configured to perform a set of transactions including Distributed Ledger Business Transaction (DLBT) and Distributed Ledger Enquiry Transaction (DLET). The DLBT includes creating and updating business data by utilizing the Quartz Gateway. The DLET includes creating and updating query business data by utilizing the Quartz Gateway. In an embodiment, the DLG provides information in single or bulk and have the API signature along with JSON schema for consumption. Additionally, the Quartz Gateway can handle multiple DL platform protocols with the help of DL Specific adapters.

In another embodiment, the system (102) is configured for blockchain coexistence is capable of: (i) concurrent Adoption of block chain (ii) enabling blockchain friendly processes to be ported on to block chain technology (iii) reusing of the existing applications or processes where relevant and enabling co existing with block chain solution iv) providing a connectivity solution for easier Integration and v) De risking and simplifying block chain adoption.

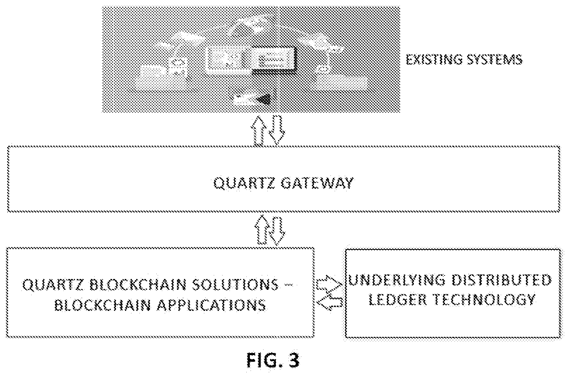

FIG. 3 illustrates an example block diagram for the blockchain coexistence architecture, in accordance with an example embodiment. Now referring to FIG. 3, the block diagram includes a set of blockchain solutions, a gateway and a set of non-blockchain systems. The set of blockchain solutions work on a blockchain. The set of non-blockchain systems are associated with a database. The Quartz Gateway enables the integration of the non-blockchain systems with the blockchain solutions. In an embodiment, the Quartz Gateway includes a standard Java Rest Application Programming Interfaces (APIs) to connect with the set of non-blockchain systems. Further, the gateway includes a distributed ledger APIs to connect to the set of blockchain solutions based on an underlying block chain technology. Here, the set of non-block chain systems can communicate by utilizing simple APIs and are independent of different underlying native DL technology APIs. Additionally, the present disclosure can connect with the underlying distributed ledger (DL) technology by utilizing the corresponding native APIs to provide co-existence and integration.

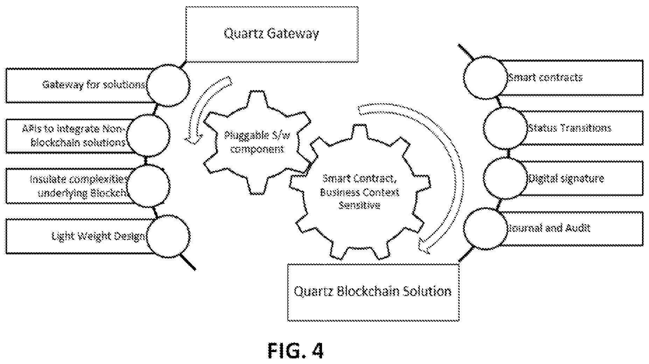

FIG. 4 illustrates an example block diagram for a gateway framework, in accordance with an example embodiment. Now referring to FIG. 4, the gateway framework includes a Quartz Gateway and a set of smart solutions. The Quartz Gateway incudes a simple Java APIs (Application Programming Interfaces) on one side for the traditional applications to connect to the blockchain APIs on the other side for connecting with the different blockchain technologies.

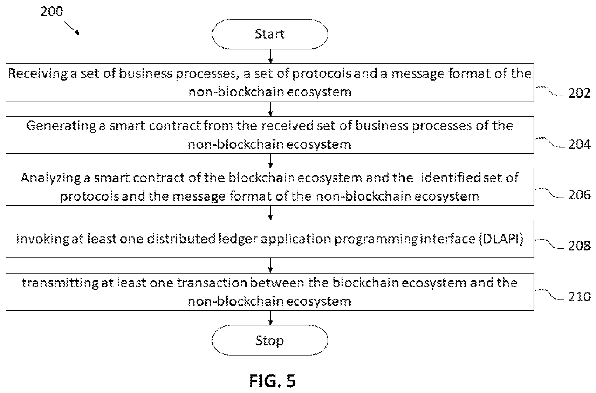

Referring FIG. 5, wherein the processor-implemented method (102) for blockchain coexistence between two or more independent ecosystems. The method comprises one or more steps for the blockchain coexistence.

Initially, at the step (202), a set of business processes, protocol and a message format of the non-blockchain ecosystem are received at a receiving module (114) of the system (102).

In the preferred embodiment, at the step (204) a smart contract is generated at a generating module (116) of the system (102) from the received set of business processes of the non-blockchain ecosystem.

In the preferred embodiment, at the step (206) a smart contract of the blockchain ecosystem and the received set of protocols and the message format of the non-blockchain ecosystem are analyzed at an analyzing module (118) of the system (102) to transmit at least one transaction.

In the preferred embodiment, at the step (208), at least one distributed ledger application programming interface (DLAPI) is invoked at an invocation module (120) of the system (102) based on the analysis of the smart contract of the blockchain ecosystem and the set of protocols and the message format of the non-blockchain ecosystem. Further, it would be appreciated that the DLAPI is invoked to integrate one or more applications of the non-blockchain ecosystem. Additionally, herein, the DLAPI is associated with an API Catalogue comprising a list of APIs for the one or more application of the non-blockchain ecosystem

Finally, at the last step (210), at least one transaction is transmitted between the blockchain ecosystem and the non-blockchain ecosystem at a transmitting module (122) of the system (102) using the invoked at least one distributed ledger application programming interface (DLAPI).

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of blockchain coexistence.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed..

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A system (102) configured for coexistence of a blockchain ecosystem with a non-blockchain ecosystem, the system comprising:
at least one memory storing a plurality of instructions;
one or more hardware processors communicatively coupled with the at least one memory, wherein the one or more hardware processors are configured to execute one or more modules;
a receiving module (114) configured to receive a set of business processes, protocol and a message format of the non-blockchain ecosystem;
a generating module (116) configured to generate a smart contract from the received set of business processes of the non-blockchain ecosystem;
an analyzing module (118) configured to analyze a smart contract of the blockchain ecosystem and the received protocol and the message format of the non-blockchain ecosystem to transmit at least one transaction;
an invocation module (120) configured to invoke at least one distributed ledger application programming interface (DLAPI) based on the analysis of the smart contract of the blockchain ecosystem and the protocol and the message format of the non-blockchain ecosystem; and
a transmitting module (122) configured to transmit the at least one transaction between the blockchain ecosystem and the non-blockchain ecosystem using the invoked at least one DLAPI,
wherein the coexistence of the blockchain ecosystem with the non-blockchain ecosystem is implemented by a gateway framework that includes a gateway and information on a set of smart solutions, to connect a blockchain solution with at least one existing application, and wherein the gateway incudes Java Application Programming Interfaces, APIs, on one side for the existing application to connect to blockchain APIs on the other side for connecting with different blockchain technologies.

2. The system claimed in claim 1, wherein the DLAPI is invoked to integrate one or more application of the non-blockchain ecosystem.

3. The system claimed in claim 1, wherein the DLAPI is associated with an API Catalogue comprising a list of APIs for the one or more application of the non-blockchain ecosystem.

4. The system claimed in claim 1, wherein the at least one transaction comprising a Distributed Ledger Business Transaction (DLBT) and a Distributed Ledger Enquiry Transaction (DLET).

5. A processor-implemented method for coexistence of a blockchain ecosystem with a non-blockchain ecosystem, the method comprising one or more steps of:
receiving (202) a set of business processes, a set of protocols and a message format of the non-blockchain ecosystem for coexistence with the blockchain ecosystem;
generating (204) a smart contract from the received set of business processes of the non-blockchain ecosystem;
analyzing (206) a smart contract of the blockchain ecosystem and the received set of protocols and the message format of the non-blockchain ecosystem to transmit at least one transaction;
invoking (208) at least one distributed ledger application programming interface (DLAPI) based on the analysis of the smart contract of the blockchain ecosystem and the set of protocols and the message format of the non-blockchain ecosystem; and
transmitting (210) the at least one transaction between the blockchain ecosystem and the non-blockchain ecosystem using the invoked at least one DLAPI,
wherein the coexistence of the blockchain ecosystem with the non-blockchain ecosystem is implemented by a gateway framework that includes a gateway and information on a set of smart solutions, to connect a blockchain solution with at least one existing application, and wherein the gateway incudes Java Application Programming Interfaces, APIs, on one side for the existing application to connect to blockchain APIs on the other side for connecting with different blockchain technologies.

6. The method claimed in claim 5, wherein the DLAPI is invoked to integrate one or more application of the non-blockchain ecosystem.

7. The method claimed in claim 5, wherein the DLAPI is associated with an API Catalogue comprising a list of APIs for the one or more application of the non-blockchain ecosystem.

8. The method claimed in claim 5, wherein the at least one transaction comprising a Distributed Ledger Business Transaction (DLBT) and a Distributed Ledger Enquiry Transaction (DLET).

## Patentansprüche

1. System (102), das zur Koexistenz eines Blockchain-Ökosystems mit einem Nicht-Blockchain-Ökosystem konfiguriert ist, wobei das System Folgendes umfasst:
mindestens einen Speicher, der eine Mehrzahl von Anweisungen speichert;
einen oder mehrere Hardwareprozessoren, die kommunikativ mit dem mindestens einen Speicher gekoppelt sind, wobei der eine oder die mehreren Hardwareprozessoren konfiguriert sind, um ein oder mehrere Module auszuführen;
ein Empfangsmodul (114), das konfiguriert ist, um einen Satz von Geschäftsprozessen, ein Protokoll und ein Nachrichtenformat des Nicht-Blockchain-Ökosystems zu empfangen;
ein Erzeugungsmodul (116), das konfiguriert ist, um einen Intelligenter Vertrag aus dem empfangenen Satz von Geschäftsprozessen des Nicht-Blockchain-Ökosystems zu erzeugen;
ein Analysemodul (118), das konfiguriert ist, um einen Intelligenter Vertrag des Blockchain-Ökosystems und das empfangene Protokoll und das Nachrichtenformat des Nicht-Blockchain-Ökosystems zu analysieren, um mindestens eine Transaktion zu übertragen;
ein Aufrufmodul (120), das konfiguriert ist, um mindestens eine Distributed-Ledger-Anwendungsprogrammierschnittstelle (DLAPI) basierend auf der Analyse des Intelligenter Vertrag des Blockchain-Ökosystems und des Protokolls und des Nachrichtenformats des Nicht-Blockchain-Ökosystems aufzurufen; und
ein Übertragungsmodul (122), das konfiguriert ist, um die mindestens eine Transaktion zwischen dem Blockchain-Ökosystem und dem Nicht-Blockchain-Ökosystem unter Verwendung des aufgerufenen mindestens einen DLAPI zu übertragen,
wobei die Koexistenz des Blockchain-Ökosystems mit dem Nicht-Blockchain-Ökosystem durch ein Gateway-Framework implementiert wird, das ein Gateway und Informationen über einen Satz von intelligenten Lösungen beinhaltet, um eine Blockchain-Lösung mit mindestens einer bestehenden Anwendung zu verbinden, und wobei das Gateway Java-Anwendungsprogrammierschnittstellen, APIs, auf einer Seite für die bestehende Anwendung beinhaltet, um sich mit Blockchain-APIs auf der anderen Seite zum Verbinden mit verschiedenen Blockchain-Technologien zu verbinden.

2. System nach Anspruch 1, wobei der DLAPI aufgerufen wird, um eine oder mehrere Anwendungen des Nicht-Blockchain-Ökosystems zu integrieren.

3. System nach Anspruch 1, wobei der DLAPI mit einem API-Katalog assoziiert ist, der eine Liste von APIs für die eine oder die mehreren Anwendungen des Nicht-Blockchain-Ökosystems umfasst.

4. System nach Anspruch 1, wobei die mindestens eine Transaktion eine Verteilte Hauptbuch-Geschäftstransaktion (DLBT) und eine Transaktion zur Abfrage des Distributed Ledger (DLET) umfasst.

5. Prozessorimplementiertes Verfahren zur Koexistenz eines Blockchain-Ökosystems mit einem Nicht-Blockchain-Ökosystem, wobei das Verfahren einen oder mehrere der folgenden Schritte umfasst:
Empfangen (202) eines Satzes von Geschäftsprozessen, eines Satzes von Protokollen und eines Nachrichtenformats des Nicht-Blockchain-Ökosystems zur Koexistenz mit dem Blockchain-Ökosystem;
Erzeugen (204) eines Intelligenter Vertrag aus dem empfangenen Satz von Geschäftsprozessen des Nicht-Blockchain-Ökosystems;
Analysieren (206) eines Intelligenter Vertrag des Blockchain-Ökosystems und des empfangenen Satzes von Protokollen und des Nachrichtenformats des Nicht-Blockchain-Ökosystems, um mindestens eine Transaktion zu übertragen;
Aufrufen (208) mindestens einer Distributed-Ledger-Anwendungsprogrammierschnittstelle (DLAPI) basierend auf der Analyse des Intelligenter Vertrag des Blockchain-Ökosystems und des Satzes von Protokollen und des Nachrichtenformats des Nicht-Blockchain-Ökosystems; und
Übertragen (210) der mindestens einen Transaktion zwischen dem Blockchain-Ökosystem und dem Nicht-Blockchain-Ökosystem unter Verwendung des aufgerufenen mindestens einen DLAPI,
wobei die Koexistenz des Blockchain-Ökosystems mit dem Nicht-Blockchain-Ökosystem durch ein Gateway-Framework implementiert wird, das ein Gateway und Informationen über einen Satz von intelligenten Lösungen beinhaltet, um eine Blockchain-Lösung mit mindestens einer bestehenden Anwendung zu verbinden, und wobei das Gateway Java-Anwendungsprogrammierschnittstellen, APIs, auf einer Seite für die bestehende Anwendung beinhaltet, um sich mit Blockchain-APIs auf der anderen Seite zum Verbinden mit verschiedenen Blockchain-Technologien zu verbinden.

6. Verfahren nach Anspruch 5, wobei der DLAPI aufgerufen wird, um eine oder mehrere Anwendungen des Nicht-Blockchain-Ökosystems zu integrieren.

7. Verfahren nach Anspruch 5, wobei der DLAPI mit einem API-Katalog assoziiert ist, der eine Liste von APIs für die eine oder die mehreren Anwendungen des Nicht-Blockchain-Ökosystems umfasst.

8. Verfahren nach Anspruch 5, wobei die mindestens eine Transaktion eine Verteilte Hauptbuch-Geschäftstransaktion (DLBT) und eine Transaktion zur Abfrage des Distributed Ledger (DLET) umfasst.

## Revendications

1. Système (102) configuré pour la coexistence d'un écosystème de chaîne de blocs avec un écosystème sans chaîne de blocs, le système comprenant :
au moins une mémoire stockant une pluralité d'instructions ;
un ou plusieurs processeurs matériels couplés en communication avec l'au moins une mémoire, dans lequel les un ou plusieurs processeurs matériels sont configurés pour exécuter un ou plusieurs modules ;
un module de réception (114) configuré pour recevoir un ensemble de processus commerciaux, un protocole et un format de message de l'écosystème sans chaîne de blocs ;
un module de génération (116) configuré pour générer un contrat intelligent à partir de l'ensemble reçu de processus commerciaux de l'écosystème sans chaîne de blocs ;
un module d'analyse (118) configuré pour analyser un contrat intelligent de l'écosystème de chaîne de blocs et le protocole reçu et le format de message de l'écosystème sans chaîne de blocs pour transmettre au moins une transaction ;
un module d'invocation (120) configuré pour invoquer au moins une interface de programmation d'application de registre distribué (DLAPI) sur la base de l'analyse du contrat intelligent de l'écosystème de chaîne de blocs et du protocole et du format de message de l'écosystème sans chaîne de blocs ; et
un module de transmission (122) configuré pour transmettre l'au moins une transaction entre l'écosystème de chaîne de blocs et l'écosystème sans chaîne de blocs en utilisant l'au moins une DLAPI invoquée,
dans lequel la coexistence de l'écosystème de chaîne de blocs avec l'écosystème sans chaîne de blocs est mise en œuvre par une infrastructure de passerelle qui comprend une passerelle et des informations sur un ensemble de solutions intelligentes, pour connecter une solution de chaîne de blocs avec au moins une application existante, et dans lequel la passerelle comprend des interfaces de programmation d'application (API) Java d'un côté pour que l'application existante se connecte à des API de chaîne de blocs de l'autre côté pour se connecter à différentes technologies de chaîne de blocs.

2. Système selon la revendication 1, dans lequel la DLAPI est invoquée pour intégrer une ou plusieurs applications de l'écosystème sans chaîne de blocs.

3. Système selon la revendication 1, dans lequel la DLAPI est associée à un catalogue d'API comprenant une liste d'API pour les une ou plusieurs applications de l'écosystème sans chaîne de blocs.

4. Système selon la revendication 1, dans lequel l'au moins une transaction comprend une transaction commerciale de registre distribué (DLBT) et une transaction d'enquête de registre distribué (DLET).

5. Procédé mis en œuvre par processeur pour la coexistence d'un écosystème de chaîne de blocs avec un écosystème sans chaîne de blocs, le procédé comprenant une ou plusieurs étapes :
réception (202) d'un ensemble de processus commerciaux, d'un ensemble de protocoles et d'un format de message de l'écosystème sans chaîne de blocs pour la coexistence avec l'écosystème de chaîne de blocs ;
génération (204) d'un contrat intelligent à partir de l'ensemble reçu de processus commerciaux de l'écosystème sans chaîne de blocs ;
analyse (206) d'un contrat intelligent de l'écosystème de chaîne de blocs et de l'ensemble reçu de protocoles et du format de message de l'écosystème sans chaîne de blocs pour transmettre au moins une transaction ;
invocation (208) d'au moins une interface de programmation d'application de registre distribué (DLAPI) sur la base de l'analyse du contrat intelligent de l'écosystème de chaîne de blocs et de l'ensemble de protocoles et du format de message de l'écosystème sans chaîne de blocs ; et
transmission (210) de l'au moins une transaction entre l'écosystème de chaîne de blocs et l'écosystème sans chaîne de blocs en utilisant l'au moins une DLAPI invoquée,
dans lequel la coexistence de l'écosystème de chaîne de blocs avec l'écosystème sans chaîne de blocs est mise en œuvre par une infrastructure de passerelle qui comprend une passerelle et des informations sur un ensemble de solutions intelligentes, pour connecter une solution de chaîne de blocs avec au moins une application existante, et dans lequel la passerelle comprend des interfaces de programmation d'application (API) Java d'un côté pour que l'application existante se connecte à des API de chaîne de blocs de l'autre côté pour se connecter à différentes technologies de chaîne de blocs.

6. Procédé selon la revendication 5, dans lequel la DLAPI est invoquée pour intégrer une ou plusieurs applications de l'écosystème sans chaîne de blocs.

7. Procédé selon la revendication 5, dans lequel la DLAPI est associée à un catalogue d'API comprenant une liste d'API pour les une ou plusieurs applications de l'écosystème sans chaîne de blocs.

8. Procédé selon la revendication 5, dans lequel l'au moins une transaction comprend une transaction commerciale de registre distribué (DLBT) et une transaction d'enquête de registre distribué (DLET).
